# EUROPÄISCHE PATENTSCHRIFT

(11) **EP 4 368 366 B1**
(45) Veröffentlichungstag und Bekanntmachung des Hinweises auf die Patenterteilung: **03.09.2025**
(21) Anmeldenummer: 22206800.9
(22) Anmeldetag: 10.11.2022
(51) Int. Cl.: B29C 51/24, B29C 51/26

(54) **TIEFZIEHVORRICHTUNG, VERPACKUNGSMASCHINE MIT EINER TIEFZIEHVORRICHTUNG UND VERFAHREN ZUM BETRIEB DER TIEFZIEHVORRICHTUNG**
DEEP DRAWING DEVICE, PACKAGING MACHINE WITH A DEEP DRAWING DEVICE AND METHOD FOR OPERATING THE DEEP DRAWING DEVICE
DISPOSITIF D'EMBOUTISSAGE PROFOND, MACHINE D'EMBALLAGE DOTÉE D'UN DISPOSITIF D'EMBOUTISSAGE PROFOND ET PROCÉDÉ DE FONCTIONNEMENT DU DISPOSITIF D'EMBOUTISSAGE PROFOND

(43) Veröffentlichungstag der Anmeldung: 15.05.2024
(73) Patentinhaber: Harro Höfliger Verpackungsmaschinen GmbH, 71573 Allmersbach im Tal (DE)
(72) Erfinder: Luka, Jürgen, 71573 Allmersbach im Tal (DE)
(74) Vertreter: Zurhorst, Stefan

(56) Entgegenhaltungen:
- US-A- 3 766 702
- US-B2- 6 874 300

## Beschreibung

Die Erfindung betrifft eine Tiefziehvorrichtung mit den Merkmalen nach dem Oberbegriff des Anspruchs 1 und eine Verpackungsmaschine zur Herstellung von gefüllten Beuteln mit einer solchen Tiefziehvorrichtung sowie ein Verfahren zum Betrieb der Tiefziehvorrichtung.

In verbreiteter Ausführung werden Verpackungseinheiten häufig dadurch hergestellt, dass zunächst Folien tiefgezogen werden. In die hierbei entstehenden Kavitäten wird ein Produkt eingefüllt, woran anschließend eine Versiegelung mit einer Deckfolie erfolgt. Es entsteht ein doppellagiger Folienstreifen, in dem Teilmengen des Produktes voneinander abgegrenzt sind. Diese Teilmengen werden abschließend in einer Schneidstation vereinzelt.

Selbstverständlich muss bei der Herstellung von derartigen Verpackungseinheiten sichergestellt werden, dass die Folie der Verpackungseinheit äußeren Belastungen standhält, so dass das verpackte Produkt ausreichend geschützt ist. Wurde während des Herstellungsprozesses von Verpackungseinheiten festgestellt, dass die Folie eingerissen ist oder sich partiell derart ausgedünnt hat, dass die Folie undicht ist, wurde bisher als Gegenmaße die Folienstärke erhöht. Auch eine Anpassung der Formprozessparameter, wie beispielsweise die Vorheiztemperatur oder Vorheizdauer der Folien, kann vorgenommen werden. Dadurch können Fehlstellen in der Folienverpackung vermieden werden. Die Verwendung einer dickeren Folie kann jedoch zu einer erhöhten Umweltbelastung führen. Zudem haben die erforderlichen Anpassungen auch eine Erhöhung der Herstellungskosten zur Folge.

Ein weiterer Nachteil der aus dem Stand der Technik bekannten Verpackungsmaschinen stellt sich insbesondere bei der Verwendung von wasserlöslichen Folien ein. Wasserlösliche Folien, wie PVOH-Folien, sind aus dem Stand der Technik hinreichend bekannt und kommen insbesondere bei der Verpackung von Wasch- und Reinigungsmitteln, beispielsweise im Einsatz für Spülmaschinen oder Waschmaschinen, zum Tragen. Die Verpackungseinheiten werden in die entsprechende Maschine gelegt und mit Wasser umspült. Sobald sich die Folie auflöst, wird das Waschmittel freigesetzt. Die Verwendung einer erhöhten Folienstärke verursacht wiederum eine Erhöhung der Auflösezeit der Verpackungseinheit. Desweiteren wurden äußerst unregelmäßige, nicht reproduzierbare Auflösezeiten der Verpackungseinheiten festgestellt.

Aus der US 6,874,300 B2 ist eine Verpackungsmaschine gemäß dem Oberbegriff des Anspruchs 1 bekannt.

Folglich ist es Aufgabe der Erfindung, eine Tiefziehvorrichtung anzugeben, die eine prozesssichere, umweltschonende und zugleich auch günstige Herstellung von gefüllten Folienbeuteln ermöglicht.

Diese Aufgabe wird durch eine Tiefziehvorrichtung mit den Merkmalen des Anspruchs 1 gelöst.

Eine weitere Aufgabe der Erfindung ist es, eine Verpackungsmaschine anzugeben, die eine prozesssichere, umweltschonende und zugleich auch günstige Herstellung von gefüllten Folienbeuteln ermöglicht.

Diese weitere Aufgabe wird durch eine Verpackungsmaschine mit den Merkmalen des Anspruchs 10 gelöst.

Eine weitere Aufgabe der Erfindung besteht darin, ein Verfahren zum Tiefziehen von Folie zur Herstellung von Folienverpackungen anzugeben, das eine prozesssichere, umweltschonende und zugleich auch günstige Herstellung von gefüllten Folienbeuteln ermöglicht.

Diese Aufgabe der Erfindung wird durch ein Verfahren mit den Merkmalen des Anspruchs 11 erfüllt.

Der Erfindung liegt die Erkenntnis zugrunde, dass die unregelmäßigen Auflösezeiten der wasserlöslichen Folien zumindest zu großen Teilen auf eine ungleichmäßige Folienstärke zurückzuführen ist. Ferner konnte festgestellt werden, dass die ungleichmäßige Folienstärke während des Tiefziehens der Folie entsteht. Ein Einflussfaktor für eine erhöhte Ausdünnung der Folie ist die Größe des für das Tiefziehen bereitgestellten Folienabschnittes. Aus dem Stand der Technik ist bekannt, dass die Folie auf der Matrizenplatte über eine Heizplatte geklemmt gehalten wird. Die Heizplatte weist hierfür eine ebene Unterseite auf. Die Heizplatte wird abgesenkt und kommt auf der Folie flächig zur Anlage. Die sich zwischen der Heizplatte und der Matrizenplatte ergebende Klemmfläche umschließt jede Einzelkavität, wodurch der Materialfluss der Folie beim Tiefziehen begrenzt wird. Um eine hohe Wirtschaftlichkeit mit einer entsprechenden Tiefziehvorrichtung zu erreichen, werden regelmäßig möglichst viele Einzelkavitäten auf einer Matrizenplatte vorgesehen, um so die Stückzahlen der zu produzierenden Verpackungseinheiten zu erhöhen. Je mehr Einzelkavitäten auf einer Matrizenplatte ausgebildet sind, desto weniger Folienmaterial steht für den Tiefziehvorgang einer jeden Einzelkavität zur Verfügung.

Um dennoch die für eine Einzelkavität bereitgestellte Folienmenge zu erhöhen und den Materialfluss der Folie zu verbessern, umfasst die erfindungsgemäße Tiefziehvorrichtung eine Anordnung von mehreren Matrizenplatten, die durch einen Transporteur in einer Umlaufbahn antreibbar ist, wobei jede Matrizenplatte an einer Oberseite mindestens zwei Einzelkavitäten umfasst, und mit mindestens einer Formvakuumeinrichtung, wobei die Formvakuumeinrichtung mindestens eine erste Vakuumquelle zur Bereitstellung eines Vakuums umfasst, und wobei die mindestens eine erste Vakuumquelle über einen ersten Vakuumkanal mit den mindestens zwei Einzelkavitäten einer jeden Matrizenplatte zur Bereitstellung eines Vakuums zum Tiefziehen einer Folie verbindbar ist, und mit mindestens einer Heizplatte zur Erwärmung der Folie, wobei die Heizplatte an ihrer Unterseite eine Klemmvorrichtung mit mindestens einem Klemmmittel zum Klemmen der Folie umfasst, wobei das Klemmmittel eine Klemmkontur zum Kontaktieren der Folie aufweist, und wobei die Klemmkontur in einer die Folie geklemmten Stellung der Tiefziehvorrichtung in Blickrichtung senkrecht auf die Oberseite der Matrizenplatte mindestens zwei Einzelkavitäten zumindest teilweise umläuft.

Durch die Klemmkontur wird den mindestens zwei Einzelkavitäten der Matrizenplatte ein größerer, gemeinsamer Folienabschnitt zugewiesen. Dies hat zur Folge, dass sich der Materialbedarf beim Tiefziehen in Abhängigkeit der geometrischen Ausgestaltung der Einzelkavitäten nivelliert. Die mindestens zwei Einzelkavitäten, nämlich eine erste Einzelkavität und eine zweite Einzelkavität, sind vorzugsweise benachbart zueinander angeordnet. Weist beispielsweise die erste Einzelkavität in einem Bereich eine erhöhte Tiefe auf, ist für diesen Bereich entsprechend viel Folienmaterial vorzusehen. Weist die zweite Einzelkavität einen zu diesem Bereich der ersten Einzelkavität benachbarten Abschnitt auf, in welchem die Tiefe der zweiten Einzelkavität reduziert ist, wird mehr Folienmaterial zu dem Bereich der ersten Einzelkavität als zu dem Abschnitt der zweiten Einzelkavität fließen. Somit erfolgt ein Materialausgleich zwischen den zwei Einzelkavitäten, da diese nicht durch eine Klemmkontur voneinander getrennt sind. Die Folie kann zwischen den mindestens zwei Einzelkavitäten frei fließen.

Folglich erfährt die Folie eine gleichmäßigere Ausdünnung. Die Verwendung einer Folie mit erhöhter Folienstärke zur Vermeidung eines Materialversagens ist nicht mehr erforderlich. Auf diese Weise können die Verpackungseinheiten auf umweltfreundliche und kostengünstige Weise hergestellt werden. Durch die gezielte und gleichmäßige Ausdünnung der Folien beim Tiefziehen kann auch die Auflösezeit der Folien, insbesondere der PVOH-Folien, im Wasser prozesssicher und reproduzierbar eingestellt werden.

Es ist vorteilhaft vorgesehen, dass die Klemmkontur in einer die Folie geklemmten Stellung der Tiefziehvorrichtung in Blickrichtung senkrecht auf die Oberseite der Matrizenplatte mindestens zwei Einzelkavitäten vollständig umläuft. Dadurch wird die Klemmwirkung der Klemmvorrichtung auf die Folie verstärkt.

Es ist insbesondere vorgesehen, dass die Klemmvorrichtung derart ausgebildet ist, dass in geklemmter Stellung der Tiefziehvorrichtung die Folie unmittelbar zwischen der Klemmkontur des Klemmmittels und der Oberseite der Matrizenplatte geklemmt ist. Besonders bevorzugt ist das Klemmmittel als ein Klemmsteg ausgebildet. Es ist vorteilhaft vorgesehen, dass der Klemmsteg das einzige Klemmmittel der Klemmvorrichtung bildet und in einer die Folie geklemmten Stellung der Tiefziehvorrichtung in Blickrichtung senkrecht auf die Oberseite der Matrizenplatte sämtliche Einzelkavitäten der Matrizenplatte umläuft. Sämtliche Einzelkavitäten sind somit nicht durch eine Klemmkontur voneinander getrennt. Folglich kann die Folie frei zwischen sämtlichen Einzelkavitäten fließen. In einer solchen Ausbildung der Klemmvorrichtung bildet der Klemmsteg einen die Einzelkavitäten umschließenden Klemmrahmen.

Besonders bevorzugt ist es vorgesehen, dass die Klemmkontur des Klemmmittels unmittelbar an der Unterseite der Heizplatte ausgebildet ist. Die Klemmvorrichtung ist bevorzugt einteilig mit der Heizplatte ausgebildet. Es kann in einer alternativen Ausführung jedoch auch zweckmäßig sein, die Klemmvorrichtung separat zur Heizplatte auszubilden. In einer solchen Ausführung wäre vorzugsweise nur die Klemmvorrichtung an der Heizplatte austauschbar.

Es ist vorteilhaft vorgesehen, dass die Klemmkontur des Klemmmittels eine Formkontur der Heizplatte umschließt, wobei die Formkontur gegenüber der Klemmkontur als Vertiefung an der Unterseite der Heizplatte ausgebildet ist. Somit ist die Formkontur in geklemmter Stellung der Tiefziehvorrichtung zur Folie beabstandet ausgebildet. Die Formkontur der Heizplatte ist bevorzugt gefräst.

Es ist vorzugweise vorgesehen, dass an der Formkontur der Heizplatte mindestens eine Kapillaröffnung ausgebildet ist, wobei die mindestens eine Kapillaröffnung über einen zweiten Vakuumkanal mit einer ersten Vakuumquelle und/oder einer zweiten Vakuumquelle verbunden ist. Bevorzugt ist die Kapillaröffnung als Kapillarbohrung ausgebildet. Wird ein Vakuum an der Formkontur angelegt, so wird die Folie an die Formkontur der Heizplatte angesaugt und dadurch vorgestreckt. Besonders bevorzugt sind mehrere Kapillaröffnungen in der Formkontur vorgesehen.

Das erfindungsgemäße Verfahren zum Tiefziehen von Folie zur Herstellung von Folienverpackungen mit einer erfindungsgemäßen Verpackungsmaschine umfasst die folgenden Schritte:
- mindestens einer Matrizenplatte wird eine Folie zugeführt,
- die Heizplatte wird auf die Matrizenplatte abgesenkt
- die Folie wird zwischen der Klemmvorrichtung der Heizplatte und der Matrizenplatte geklemmt gehalten.

Vorzugsweise wird die Folie durch die Heizplatte erwärmt. Dadurch wird das Fließverhalten der Folie begünstigt. Es ist vorteilhaft vorgesehen, dass zur Vorstreckung der Folie an der Formkontur der Heizplatte ein Vakuum angelegt wird, wodurch die Folie von der Heizplatte angesaugt wird und sich an der Formkontur anlegt. Die Folie wird dabei vorgestreckt.

Es ist vorteilhaft vorgesehen, dass die Folie, insbesondere nach einer Vorstreckung, in die Matrizenform der Matrizenplatte durch ein an der Matrizenform anliegendes Vakuum tiefgezogen wird. Wird ein Vakuum an der Matrizenform angelegt, so wird vorzugsweise zeitgleich das Vakuum in der Formkontur deaktiviert. Dies hat zur Folge, dass der auf die Folie wirkende Tiefziehkraft, die durch das an der Matrizenform anliegende Vakuum erzeugt wird, keine durch das Vakuum an der Formkontur erzeugte Kraft entgegenwirkt. Vielmehr kann es vorteilhaft vorgesehen sein, an der Formkontur einen Überdruck anzulegen, so dass die Folie zusätzlich über eine durch den Überdruck auf die Folie wirkende Druckkraft in die Matrizenform gedrückt wird.

Mehrere Ausführungsbeispiele der Erfindung sind nachfolgend anhand der Zeichnung näher beschrieben. Es zeigen:
- Fig. 1: in einer seitlichen Ausschnittsdarstellung eine erfindungsgemäß ausgeführte Verpackungsmaschine mit einem kontinuierlich umlaufend bewegten Transporteur sowie mit zyklisch mitbewegten Form-, Füll- und Siegelstationen,
- Fig. 2: in einer schematischen Schnittdarstellung in Blickrichtung auf die Oberseite der Matrizenplatte die Tiefziehvorrichtung mit Klemmkontur
- Fig. 3: in einer schematischen Schnittdarstellung in Blickrichtung auf die Oberseite der Matrizenplatte die Tiefziehvorrichtung mit als Klemmrahmen ausgebildeter Klemmkontur,
- Fig. 4: in einer perspektivischen Darstellung eine Ausführung der Heizplatte mit einer als Klemmrahmen ausgebildeter Klemmkontur,
- Fig. 5: in einer ausschnittsweisen Schnittdarstellung die Tiefziehvorrichtung mit angehobener Heizplatte nach Fig. 4,
- Fig. 6: in einer ausschnittsweisen Schnittdarstellung die Tiefziehvorrichtung mit geschlossener Heizplatte nach Fig. 4,
- Fig. 7: in einer perspektivischen Darstellung eine Ausführung der Heizplatte mit einer als Klemmrahmen ausgebildeter Klemmkontur und mit Kapillaröffnungen,
- Fig. 8: in einer ausschnittsweisen Schnittdarstellung die Tiefziehvorrichtung mit angehobener Heizplatte nach Fig. 7,
- Fig. 9: in einer ausschnittsweisen Schnittdarstellung die Tiefziehvorrichtung mit geschlossener Heizplatte nach Fig. 7,
- Fig. 10: in einer perspektivischen Darstellung eine Ausführung der Heizplatte mit einer Klemmkontur für zwei Einzelkavitäten und mit Kapillaröffnungen,
- Fig. 11: in einer ausschnittsweisen Schnittdarstellung die Tiefziehvorrichtung mit angehobener Heizplatte nach Fig. 10 und
- Fig. 12: in einer ausschnittsweisen Schnittdarstellung die Tiefziehvorrichtung mit geschlossener Heizplatte nach Fig. 10,

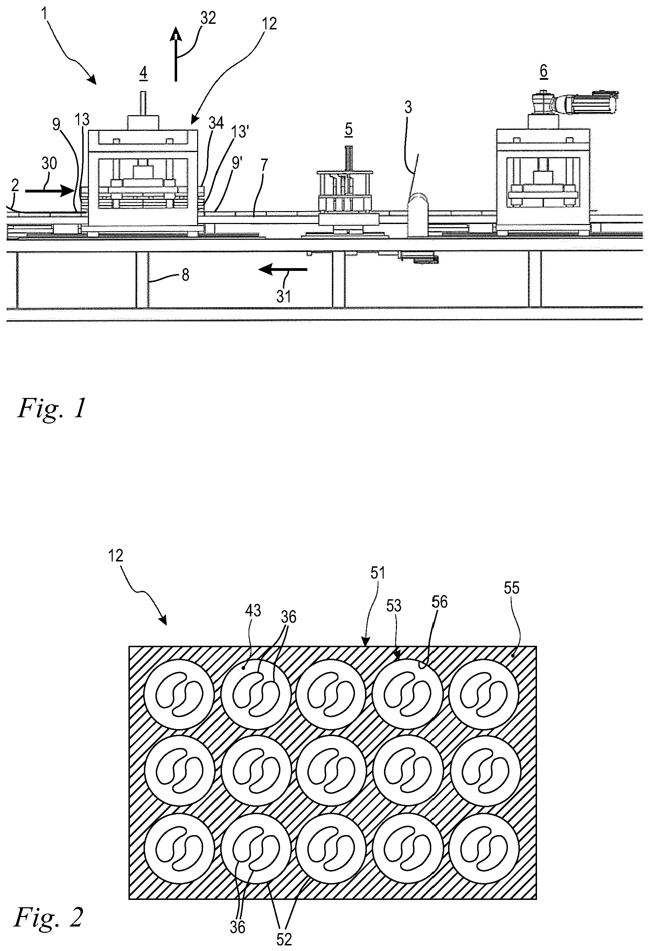

Fig. 1 zeigt in einer Seitenansicht einen Ausschnitt aus einer erfindungsgemäßen Verpackungsmaschine 1 zur Herstellung von gefüllten Beuteln. Hierzu umfasst die Verpackungsmaschine 1 ein Maschinengestell 8, eine Formstation 4, eine Füllstation 5 und eine Siegelstation 6. Eine Folie 2 wird der Verpackungsmaschine 1 zugeführt und in der Formstation 4 tiefgezogen, so dass sich in der Folie 2 Kavitäten ausbilden. Die Folie 2 ist im vorliegenden Ausführungsbeispiel als Folienbahn ausgebildet. Es kann auch zweckmäßig sein, der Verpackungsmaschine 1 einzelne Folienblätter zu zuführen.

Die Kavitäten werden in der Füllstation 5 mit einem Produkt befüllt. Hieran anschließend wird eine Deckfolie 3 zugeführt und in der Siegelstation 6 auf die Folienbahn 2 aufgesiegelt, wobei die befüllten Kavitäten verschlossen werden. In einer nicht dargestellten Schneidestation wird die solchermaßen gebildete Folieneinheit zu Folienbeuteln vereinzelt. Im Ausführungsbeispiel handelt es sich bei der Folie 2 und bei der Deckfolie 3 um wasserlösliche Folien, namentlich um PVOH-Folien, zwischen denen beispielsweise ein Wasch- oder Reinigungsmittel verpackt wird. Solchermaßen hergestellte gefüllte Folienbeutel werden beispielsweise in eine Spülmaschine eingelegt. Dort löst sich das Folienmaterial bei Wasserkontakt auf und gibt das enthaltene Spülmittel frei. Sinngemäß das Gleiche gilt für den Einsatz eines solchen Folienbeutels in einer Waschmaschine.

Die Verpackungsmaschine 1 umfasst das ortsfest montierte Maschinengestell 8 sowie einen bevorzugt kontinuierlich angetriebenen Transporteur 7. Der Transporteur 7 kann ein Förderband oder dergleichen sein und ist im bevorzugten Ausführungsbeispiel durch gelenkig und kettenartig miteinander verbundene Elemente gebildet, auf denen mehrere Matrizenplatten 9, 9' montiert sind. Letztere werden zusammen mit dem Transporteur 7 bevorzugt kontinuierlich und um das Maschinengestell 8 umlaufend angetrieben, wobei sie sich für den eigentlichen Herstellvorgang der Beutel auf einer oberen horizontalen Bahn entsprechend einem Pfeil 30 bewegen und nach entsprechender Umlenkung anschließend im unteren Bereich des Maschinengestells 8 entsprechend einem Pfeil 31 zurückgeführt werden. Ebenso bevorzugt kontinuierlich wird die Folie 2, eine bevorzugt endlose Folienbahn, zugeführt und von oben auf den Transporteur 7 mit den Matrizenplatten 9, 9' aufgelegt. Zwischen der Füllstation 5 und der Siegelstation 6 wird später noch die Deckfolie 3 bevorzugt kontinuierlich zugeführt und von oben auf die Oberseite der Folie 2 aufgelegt. Die Folie 2 und die Deckfolie 3 werden im aufgelegten Zustand entsprechend dem Pfeil 30 synchron und bevorzugt kontinuierlich mit dem Transporteur 7 mitbewegt.

Die Station zur Zufuhr der Folie 2 sowie die Station zur Zufuhr der Deckfolie 3 sind ortsfest gegenüber dem Maschinengestell 8 ausgebildet, ebenso wie nicht dargestellte Stationen für Wasserauftrag zur Unterstützung des Siegelvorgangs sowie für das Perforieren bzw. seitliche Beschneiden der Folien. Es kann auch vorgesehen sein, dass die Stationen zumindest teilweise an dem Maschinengestell befestigt sind. In der bevorzugten Ausführung der Verpackungsmaschine 1 ist die Bewegung des Transporteurs 7 kontinuierlich. In einer solchen Ausführung der Verpackungsmaschine 1 arbeiten die hier durchgeführten Prozesse ebenso kontinuierlich. Um eine kontinuierliche Bewegung ausführen zu können, sind die Formstation 4, die Füllstation 5 und die Siegelstation 6 nicht ortsfest relativ zum Maschinengestell 8 positioniert, sondern werden abschnittsweise über eine bestimmte Wegstrecke synchron mit dem Transporteur 7 mitgefahren. Währenddessen erfolgt in der Formstation 4 das Tiefziehen der Folie 2, in der Füllstation 5 das Einfüllen des zu verpackenden Produkts in die tiefgezogenen Kavitäten und in der Siegelstation 6 das Aufsiegeln der Deckfolie 3 auf die untere Folie 2. Nach Beendigung des jeweiligen Vorganges werden die Formstation 4, die Füllstation 5 und die Siegelstation 6 zyklisch wieder zurück auf ihre Ausgangsposition verfahren, wo dann ein neuer Zyklus des jeweils ausgeführten Prozesses beginnt.

Wie in Fig. 1 gezeigt, ist die Formstation 4 durch eine Tiefziehvorrichtung 12 gebildet. Die Tiefziehvorrichtung 12 kann dazu ausgelegt sein, nur eine einzelne Matrizenplatte 9, 9' aufzunehmen und dort die Folie 2 in einem Zyklus tiefzuziehen. Im gezeigten Ausführungsbeispiel ist die Tiefziehvorrichtung 12 zur gleichzeitigen Aufnahme von mehreren, hier zwei aufeinanderfolgenden Matrizenplatten 9, 9' ausgelegt.

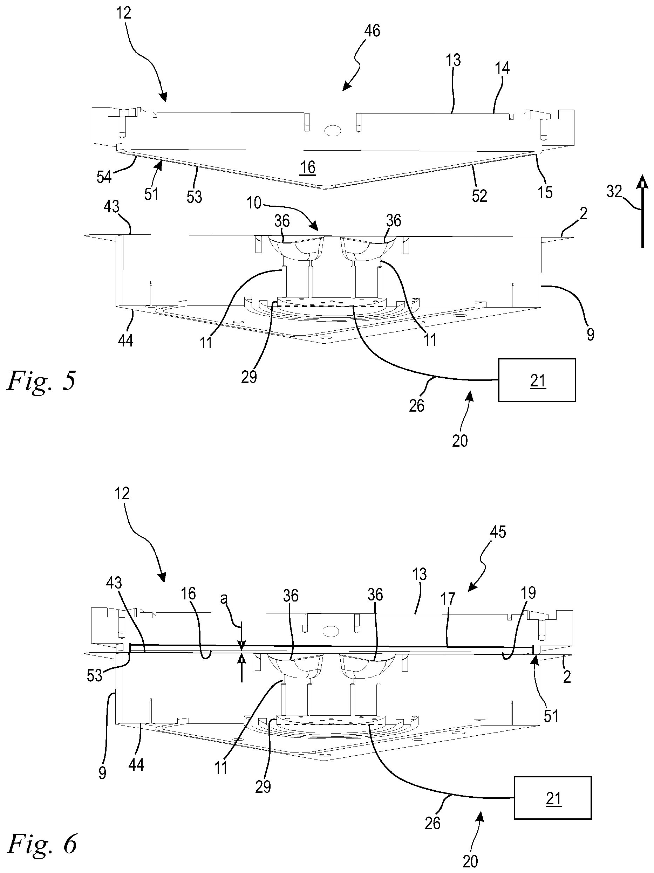

Wie in den Figuren 5 und 6 gezeigt, weist eine einzelne Matrizenplatte 9, 9' auf ihrer Oberseite 43 jeweils mindestens zwei Einzelkavitäten 36 auf. Dabei können die mindestens zwei Einzelkavitäten 36 eine einzige Matrizenform 10 oder zwei Matrizenformen bilden. Es kann in einer bevorzugten Ausführungsform der Tiefziehvorrichtung 12 auch zweckmäßig sein, mehr als zwei Einzelkavitäten 36 vorzusehen. Im vorliegenden Ausführungsbeispiel sind auf jeder Matrizenplatte 9, 9' vier Einzelkavitäten 36 ausgebildet. In besonders bevorzugter Ausführung sind 44 oder 48 Produkte auf einer Matrizenplatte 9, 9' ausgebildet, wobei jedes Produkt wiederum aus einer oder mehreren Einzelkavitäten 36 ausgebildet ist. Jede Einzelkavität 36 ist mit mindestens einer Kapillarbohrung 11, vorzugsweise mehreren Kapillarbohrungen 11 versehen. Die Kapillarbohrungen 11 sind Teil eines ersten Vakuumkanals 26, über welchen die Einzelkavitäten 36 mit einer ersten Vakuumquelle 21 verbunden sind. Die Kapillarbohrungen 11 einer Einzelkavität 36 münden in einer gemeinsamen Vakuumkammer 29, wodurch die Kapillarbohrungen 11 miteinander strömungsverbunden sind. Somit erfolgt über die Vakuumkammer 29 zwischen den einzelnen Kapillarbohrungen 11 ein Druckausgleich. Die Vakuumkammer 29 ist bevorzugt an einer Unterseite 44 der Matrizenplatte 9, 9'ausgebildet. Die Unterseite 44 der Matrizenplatte 9, 9' ist die der Oberseite 43 der Matrizenplatte 9, 9' abgewandte Seite der Matrizenplatte 9, 9'. Die Vakuumkammer 29 ist ebenfalls Teil des ersten Vakuumkanals 26. Die erste Vakuumquelle 21 erzeugt ein Vakuum, also einen Unterdruck, wobei das Vakuum den Einzelkavitäten 36 über ein nicht näher dargestelltes Ventil, das funktional in dem ersten Vakuumkanal 26 zwischen der Vakuumquelle 21 und der Matrizenform 10 angeordnet ist, zuschaltbar ist. Mittels des Vakuums an den Einzelkavitäten 36 wird die Folie 2 in die Einzelkavitäten 36 tiefgezogen. Der Vakuumkanal 26 und die erste Vakuumquelle 21 sind Teile einer Formvakuumeinrichtung 20, die zur Bereitstellung eines Vakuums in den Einzelkavitäten 36 dient.

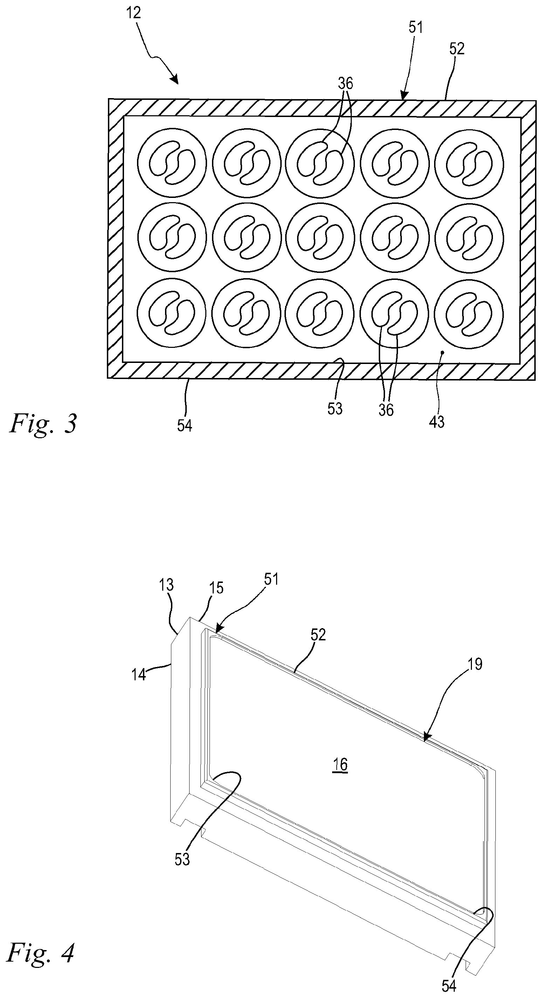

Wie in den Figuren 4 bis 6 gezeigt, umfasst die Tiefziehvorrichtung 12 eine Heizplatte 13. Die Heizplatte 13 dient zur Erwärmung der Folie 2, bevor und / oder während diese tiefgezogen wird. Dadurch wird der Materialfluss der Folie begünstigt. Zum Erwärmen der Folie 2 wird die Matrizenplatte 9, 9' mit der darauf angeordneten Folie 2 unterhalb der Heizplatte 13 positioniert. Anschließend wird die Heizplatte 13 abgesenkt, bis ein Abstand a zwischen der Heizplatte 13 und der Folie 2 eingestellt ist. Je näher die Heizplatte 13 an der Folie 2 positioniert wird, desto höher ist der Wärmeübertrag auf die Folie 2. Der Abstand a kann je nach erforderlichem Fließverhalten der Folie 2 größer oder kleiner gewählt werden, wodurch der globale Wärmeübertrag von der Heizplatte 13 auf die Folie 2 eingestellt werden kann. Es kann auch zweckmäßig sein, den Abstand a null zu wählen, um einen maximalen Wärmeübertrag auf die Folie 2 zu erzielen. Die Heizplatte 13 wird über eine Druckplatte 34 in Hochrichtung 32 auf- und abbewegt. Die Hochrichtung 32 verläuft von einer Unterseite 15 der Heizplatte 13 zu einer Oberseite 14 der Heizplatte 13. Die Hochrichtung 32 ist vorzugsweise der Richtung der Schwerkraft entgegengerichtet.

Wie in den Figuren 4 bis 6 gezeigt, umfasst die Heizplatte 13 die der Matrizenplatte 9, 9' abgewandte Oberseite 14 und die der Matrizenplatte 9, 9' zugewandte Unterseite 15. Die Heizplatte 13 umfasst auf ihrer Unterseite 15 eine Klemmvorrichtung 51. Die Klemmvorrichtung 51 umfasst in der vorliegenden Ausführung lediglich ein Klemmmittel 52 mit einer Klemmkontur 53. Das Klemmmittel 52 ist als ein Klemmsteg 54 ausgebildet. Der Klemmsteg 54 verläuft im Ausführungsbeispiel benachbart zu den Längsseiten und den Querseiten der Heizplatte 13. Der Klemmsteg 54 bildet somit eine im Wesentlichen rechteckige Klemmkontur 53. Der Klemmsteg 54 bildet in der Ausführung nach den Figuren 4 bis 6 eine Art Klemmrahmen.

Wie in den Figuren 4 bis 6 gezeigt, umfasst die Heizplatte 13 mindestens eine Formkontur 16. Die Klemmkontur 53 des Klemmmittels 52 umläuft die Formkontur 16. Im Ausführungsbeispiel umfasst die Heizplatte 13 lediglich eine einzige Formkontur 16. Die Formkontur 16 ist aus einer ebenen Fläche gebildet. Die Formkontur 16 ist als eine Vertiefung 19 gegenüber dem Klemmmittel 52 ausgebildet. Demnach liegt bezüglich der Hochrichtung 32 die Klemmkontur 53 des Klemmmittels 52 unterhalb der Formkontur 16.

Die Fig. 6 zeigt die Tiefziehvorrichtung 12 in einer die Folie 2 geklemmten Stellung 45. In dieser geklemmten Stellung 45 kontaktiert die Heizplatte 13 mit der Klemmkontur 53 des Klemmmittels 52 die Folie 2. Die Folie 2 wird über die Klemmkontur 53 des Klemmmittels 52 gegen die Oberseite 43 der Matrizenplatte 9, 9' gedrückt und dadurch geklemmt gehalten. Im Bereich der Formkontur 16 ist die Heizplatte 13 gegenüber der Folie 2 kontaktfrei. Der Abstand der Formkontur 16 der Heizplatte 13 und der Folie 2 ist somit immer größer null. In Blickrichtung senkrecht auf die Oberseite 43 der Matrizenplatte 9, 9' umläuft die Klemmkontur 53 die Einzelkavitäten 36 der Matrizenplatte 9, 9'. Es kann in einer alternativen, nicht näher dargestellten Ausführung vorgesehen sein, dass die Klemmkontur 53 die Einzelkavitäten 36 lediglich teilweise umläuft. Die bevorzugte Ausführung der Heizplatte 13 ist hingegen derart ausgebildet, dass die Klemmkontur 53 die Einzelkavitäten 36 vollständig umläuft.

In Fig. 3 ist in einer schematischen Darstellung eine Klemmvorrichtung 51 gezeigt, die im Wesen der Klemmvorrichtung 51 nach den Figuren 4 bis 6 entspricht. Schraffiert dargestellt ist die Schnittfläche des Klemmmittels 52, das die Folie 2 gegen die Oberseite 43 der Matrizenplatte 9, 9' drückt. Ferner sind 30 Einzelkavitäten 36 an der Matrizenplatte 9, 9' ausgebildet, die allesamt von der Klemmkontur 53 des Klemmmittels 52 vollständig umringt sind. Die Einzelkavitäten 36 sind nicht durch weitere Klemmkonturen voneinander getrennt. Somit kann die Folie 2 zwischen den Einzelkavitäten 36 frei fließen. Der Materialfluss der Folie 2 ist somit begünstigt, wodurch eine Vergleichmäßigung der Folienstärke erzielt werden kann.

Ist also die Folie 2, wie in Fig. 6 gezeigt, zwischen der Klemmkontur 53 und der Oberseite 43 der Matrizenplatte 9, 9' geklemmt gehalten, wird die Folie 2 in die Einzelkavitäten 36 tiefgezogen. Hierfür wird ein Vakuum in den Einzelkavitäten 36 angelegt. Während des Tiefziehens kann die Folie 2 frei zwischen den Einzelkavitäten 36 fließen, wodurch eine lokal erhöhte Ausdünnung der Folie 2 vermieden werden kann.

Die Formkontur 16 wird vorzugsweise in die Heizplatte 13 eingefräst. Für die Matrizenplatten 9, 9', die sich in der Ausbildung und Anordnung der Einzelkavitäten 36 unterscheiden, sind angepasste Heizplatten 13 zu erstellen. Werden die Matrizenplatten 9, 9' einer Verpackungsmaschine 1 gewechselt, so ist auch die Heizplatte 13 der Tiefziehvorrichtung 12 auszutauschen. In einer alternativen Ausführung der Tiefziehvorrichtung 12 kann es zweckmäßig sein, eine eigene Klemmvorrichtung vorzusehen, die an der Heizplatte 13 befestigbar ist. In einer solchen Ausführung müsste lediglich die Klemmvorrichtung, nicht jedoch die gesamte Heizplatte 13 ausgetauscht werden.

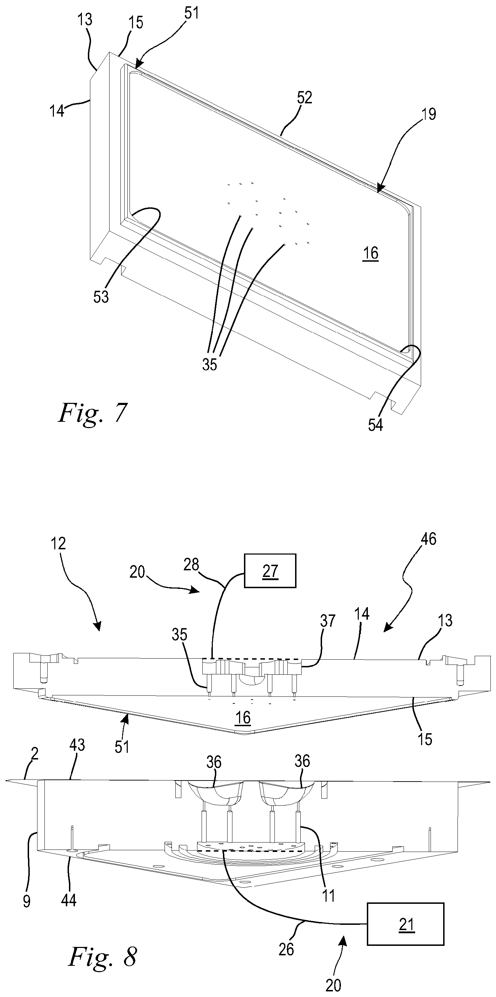

Die Figuren 7 bis 9 zeigen eine besonders bevorzugte Ausführung der erfindungsgemäßen Tiefziehvorrichtung 12, die sich von der Ausführung nach den Figuren 4 bis 6 lediglich darin unterscheidet, dass die Heizplatte 13 eine Vorstreckung der Folie 2 ermöglicht. Hierfür ist an der Formkontur 16 der Heizplatte 13 mindestens eine Kapillaröffnung 35 vorgesehen. Die mindestens eine Kapillaröffnung 35 ist über einen zweiten Vakuumkanal 28 mit einer zweiten Vakuumquelle 27 verbunden. Es kann alternativ auch vorgesehen sein, dass der zweite Vakuumkanal 28 mit der ersten Vakuumquelle 21 oder sowohl mit der ersten Vakuumquelle 21 als auch mit der zweiten Vakuumquelle 27 verbunden ist. Die Vakuumquellen 21, 27 sowie die entsprechenden Vakuumkanäle 27, 28 sind in allen Figuren lediglich schematisch eingezeichnet. Auch die zweite Vakuumquelle 27 und der zweite Vakuumkanal 28 sind Teil einer Formvakuumeinrichtung 20.

In der bevorzugten Ausführung der Tiefziehvorrichtung 12 nach den Figuren 7 bis 9 sind an der Formkontur 16 mehrere Kapillaröffnungen 35 vorgesehen. Die Kapillaröffnungen 35 sind bevorzugt als Bohrungen ausgebildet. Die Kapillaröffnungen 35 münden in eine zweite Vakuumkammer 37, über welche die Kapillaröffnungen 35 miteinander strömungsverbunden sind. Demnach erfolgt über die zweite Vakuumkammer 37 ein Druckausgleich zwischen den Kapillaröffnungen 35 der Formkontur 16. Die zweite Vakuumkammer 37 ist wie die Kapillaröffnungen 35 der Formkontur 16 Teil des zweiten Vakuumkanals 28.

Zum Vorstrecken der Folie 2 wird über die zweite und/oder erste Vakuumquelle 21, 27 ein Vakuum an der Formkontur 16 angelegt, wodurch ein Folienabschnitt 17 der Folie 2 an die Formkontur 16 angesaugt wird. Die Folie 2 kommt insbesondere im Bereich der Kapillaröffnungen 35 an der Formkontur 16 zur Anlage. In diesen Bereichen kontaktiert die Folie 2 unmittelbar die Heizplatte 13, wodurch sich der Wärmeübertrag auf die Folie 2 erhöht. Vorzugsweise sind die Kapillaröffnungen 35 derart in der Formkontur 16 verteilt angeordnet, dass die Folie an den Bereichen an der Heizplatte 13 zur Anlage kommt, an denen das Fließverhalten der Folie 2 begünstigt werden soll. Selbiges gilt auch für die Vorstreckung der Folie 2. Insbesondere die Bereiche, die ein erhöhtes Fließverhalten aufweisen sollen, sind über den Unterdruck der Kapillarbohrungen 35 besonders vorzustrecken. Entsprechend sind die Kapillaröffnungen 35 über die Formkontur 16 zu verteilen.

Ist der Folienabschnitt 17 ausreichend erwärmt und vorgestreckt, wird der Unterdruck an der Formkontur 16 deaktiviert und zugleich der Unterdruck in der Matrizenform 10 eingeschaltet. Die Folie 2 wird tiefgezogen. Besonders bevorzugt kann an der Formkontur 16 auch ein Überdruck angelegt werden, um das Tiefziehen der Folie 2 zu begünstigen. Anschließend wird der Tiefziehvorrichtung 12 eine neue Matrizenplatte 9, 9' zugeordnet und der Tiefziehvorgang wird erneut wiederholt.

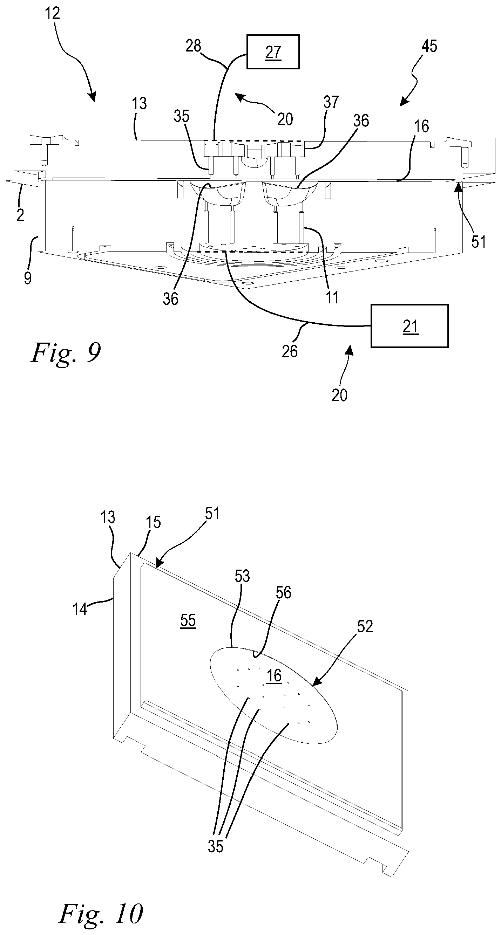

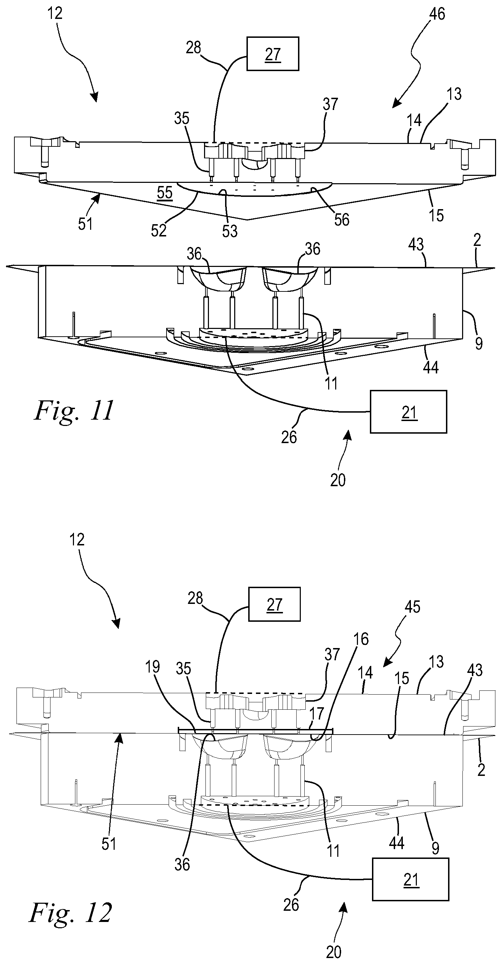

In den Figuren 10 bis 12 ist eine weitere Ausführung der Tiefziehvorrichtung 12 gezeigt, die sich von der Ausführung nach den Figuren 7 bis 9 lediglich in der Ausgestaltung der Klemmvorrichtung 51 unterscheidet. Die Klemmvorrichtung 51 ist durch eine Klemmfläche 55 gebildet, wobei die Klemmkontur 53 durch eine an der Formkontur 16 angrenzende Klemmkante 56 gebildet ist. Die Formkontur 16 ist als eine Vertiefung 19 gegenüber der Klemmfläche 55 gebildet. Das Klemmmittel 52 ist dabei durch eine durchgehende Formkontur 53 gebildet. Wie in der Ausführung nach den Figuren 10 bis 12 gezeigt, umläuft die Klemmkontur 53 mindestens vier Einzelkavitäten 36. In geklemmter Stellung 45 der Tiefziehvorrichtung 12 kontaktiert die Klemmvorrichtung 51 mit ihrer Klemmfläche 55 die Folie 2. Die Formkontur 16 steht nicht im Kontakt mit der Folie 2. Erst mit Aktivierung des Vakuums an der Formkontur 16 zum Vorstrecken der Folie 2 wird die Folie 2 an die Formkontur 16 angelegt. Da beim Tiefziehen das Vakuum an der Formkontur 16 deaktiviert ist, kann die Folie 2 selbstverständlich frei zwischen den Einzelkavitäten 36 fließen.

In Fig. 2 ist eine schematische Schnittdarstellung einer Ausführung einer Klemmvorrichtung 51 in Blickrichtung auf die Oberseite 43 der Matrixplatte 9, 9' gezeigt, die im Wesen der Ausführung nach den Figuren 10 bis 12 entspricht. Die als Klemmfläche 55 ausgebildete Klemmvorrichtung 51 weist in dieser Ausführung eine Vielzahl von Klemmmitteln 52 auf, deren Klemmkontur jeweils zwei Einzelkavitäten 36 umlaufen. Somit kann beim Tiefziehen die Folie 2 jeweils zwischen zwei Einzelkavitäten frei fließen. Der Materialfluss der Folie 2 ist somit beim Tiefziehen begünstigt.

## Patentansprüche

1. Tiefziehvorrichtung zum Tiefziehen von Folie,
umfassend eine Anordnung von mehreren Matrizenplatten (9, 9'), die durch einen Transporteur (7) in einer Umlaufbahn antreibbar ist, wobei jede Matrizenplatte (9, 9') an einer Oberseite (43) mindestens zwei Einzelkavitäten (36) umfasst, und mit mindestens einer Formvakuumeinrichtung (20), wobei die Formvakuumeinrichtung (20) mindestens eine erste Vakuumquelle (21) zur Bereitstellung eines Vakuums umfasst, und wobei die mindestens eine erste Vakuumquelle (21) über einen ersten Vakuumkanal (26) mit den mindestens zwei Einzelkavitäten (36) einer jeden Matrizenplatte (9, 9') zur Bereitstellung eines Vakuums zum Tiefziehen einer Folie (2) verbindbar ist, und mit mindestens einer Heizplatte (13) zur Erwärmung der Folie (2),
**dadurch kennzeichnet, dass** die Heizplatte (13) an ihrer Unterseite (15) eine Klemmvorrichtung (51) mit mindestens einem Klemmmittel (52) zum Klemmen der Folie (2) umfasst, wobei das Klemmmittel (52) eine Klemmkontur (53) zum Kontaktieren der Folie (2) aufweist, und wobei die Klemmkontur (53) in einer die Folie (2) geklemmten Stellung (45) der Tiefziehvorrichtung (12) in Blickrichtung senkrecht auf die Oberseite (43) der Matrizenplatte (9, 9') mindestens zwei Einzelkavitäten (36) zumindest teilweise umläuft.

2. Tiefziehvorrichtung nach Anspruch 1,
**dadurch gekennzeichnet, dass** die Klemmkontur (53) in einer die Folie (2) geklemmten Stellung (45) der Tiefziehvorrichtung (12) in Blickrichtung senkrecht auf die Oberseite (43) der Matrizenplatte (9, 9') mindestens zwei Einzelkavitäten (36) vollständig umläuft.

3. Tiefziehvorrichtung nach Anspruch 1 oder 2,
**dadurch gekennzeichnet, dass** die Klemmvorrichtung (51) derart ausgebildet ist, dass in geklemmter Stellung (45) der Tiefziehvorrichtung (12) die Folie (2) unmittelbar zwischen der Klemmkontur (53) des Klemmmittels (52) und der Oberseite (43) der Matrizenplatte (9, 9') geklemmt ist.

4. Tiefziehvorrichtung nach einem der Ansprüche 1 bis 3,
**dadurch gekennzeichnet, dass** das Klemmmittel (52) als ein Klemmsteg (54) ausgebildet ist.

5. Tiefziehvorrichtung nach Anspruch 4,
**dadurch gekennzeichnet, dass** der Klemmsteg (54) das einzige Klemmmittel (52) der Klemmvorrichtung (51) bildet und in einer die Folie (2) geklemmten Stellung (45) der Tiefziehvorrichtung (12) in Blickrichtung senkrecht auf die Oberseite (43) der Matrizenplatte (9, 9') sämtliche Einzelkavitäten (36) der Matrizenplatte (9, 9') umläuft.

6. Tiefziehvorrichtung nach einem der Ansprüche 1 bis 5,
**dadurch gekennzeichnet, dass** die Klemmkontur (53) des Klemmmittels (52) unmittelbar an der Unterseite (15) der Heizplatte (13) ausgebildet ist.

7. Tiefziehvorrichtung nach einem der Ansprüche 1 bis 6,
**dadurch gekennzeichnet, dass** die Klemmkontur (53) des Klemmmittels (52) eine Formkontur (16) der Heizplatte (9, 9') umschließt, wobei die Formkontur (16) gegenüber der Klemmkontur (53) als Vertiefung (19) an der Unterseite der Heizplatte (13) ausgebildet ist.

8. Tiefziehvorrichtung nach Anspruch 7,
**dadurch gekennzeichnet, dass** die Formkontur (16) der Heizplatte (13) gefräst ist.

9. Tiefziehvorrichtung nach Anspruch 7 oder 8,
**dadurch gekennzeichnet, dass** an der Formkontur (16) der Heizplatte (13) mindestens eine Kapillaröffnung (35) ausgebildet ist, wobei die mindestens eine Kapillaröffnung (35) über einen zweiten Vakuumkanal (28) mit einer ersten Vakuumquelle (21) und/oder einer zweiten Vakuumquelle (27) verbunden ist.

10. Verpackungsmaschine zur Herstellung von Folienverpackungen mit einer Tiefziehvorrichtung (12) nach einem der Ansprüche 1 bis 9.

11. Verfahren zum Tiefziehen von Folie zur Herstellung von Folienverpackungen mit einer Verpackungsmaschine nach Anspruch 10,
wobei mindestens einer Matrizenplatte (9, 9') eine Folie (2) zugeführt wird, wobei die Heizplatte (13) auf die Matrizenplatte (9, 9') abgesenkt wird, wobei die Folie (2) zwischen der Klemmvorrichtung (51) der Heizplatte (13) und der Matrizenplatte (9, 9') geklemmt wird.

12. Verfahren nach Anspruch 11,
wobei die Folie (2) durch die Heizplatte (13) erwärmt wird.

13. Verfahren nach Anspruch 11 oder 12,
**dadurch gekennzeichnet, dass** zur Vorstreckung der Folie (2) an der Formkontur (16) der Heizplatte (13) ein Vakuum angelegt wird, wodurch die Folie (2) von der Heizplatte (13) angesaugt wird und sich an der Formkontur (16) anlegt.

14. Verfahren nach einem der Ansprüche 11 bis 13,
**dadurch gekennzeichnet, dass** die Folie (2), insbesondere nach einer Vorstreckung der Folie (2), in die Einzelkavitäten (36) der Matrizenplatte (9, 9') durch ein in den Einzelkavitäten (36) anliegendes Vakuum tiefgezogen wird.

## Claims

1. Vacuum-forming device for vacuum-forming film,
comprising an assembly of a plurality of die plates (9, 9') which can be driven by a transporter (7) in a revolving path, wherein each die plate (9, 9') comprises on an upper side (43) at least two individual cavities (36), and having at least one forming vacuum device (20), wherein the forming vacuum device (20) comprises at least one first vacuum source (21) for providing a vacuum, and wherein the at least one first vacuum source (21) can be connected via a first vacuum channel (26) to the at least two individual cavities (36) of each die plate (9, 9') for providing a vacuum for vacuum-forming a film (2), and having at least one heating plate (13) for heating the film (2),
**characterized in that** the heating plate (13) comprises on its lower side (15) a clamping device (51) having at least one clamping means (52) for clamping the film (2), wherein the clamping means (52) has a clamping contour (53) for contacting the film (2), and wherein the clamping contour (53) in a position (45) of the vacuum-forming device (12) clamping the film (2), when viewed perpendicularly onto the upper side (43) of the die plate (9, 9'), encircles at least partially at least two individual cavities (36).

2. Vacuum-forming device according to Claim 1,
**characterized in that** the clamping contour (53) in a position (45) of the vacuum-forming device (12) clamping the film (2), when viewed perpendicularly onto the upper side (43) of the die plate (9, 9'), encircles completely at least two individual cavities (36).

3. Vacuum-forming device according to Claim 1 or 2,
**characterized in that** the clamping device (51) is formed in such a way that the film (2) in the clamped position (45) of the vacuum-forming device (12) is clamped directly between the clamping contour (53) of the clamping means (52) and the upper side (43) of the die plate (9, 9').

4. Vacuum-forming device according to one of Claims 1 to 3,
**characterized in that** the clamping means (52) is formed as a clamping web (54).

5. Vacuum-forming device according to Claim 4,
**characterized in that** the clamping web (54) forms the only clamping means (52) of the clamping device (51), and in a position (45) of the vacuum-forming device (12) clamping the film (2), when viewed perpendicularly onto the upper side (43) of the die plate (9, 9'), encircles all of the individual cavities (36) of the die plate (9, 9').

6. Vacuum-forming device according to one of Claims 1 to 5,
**characterized in that** the clamping contour (53) of the clamping means (52) is formed directly on the lower side (15) of the heating plate (13).

7. Vacuum-forming device according to one of Claims 1 to 6,
**characterized in that** the clamping contour (53) of the clamping means (52) encloses a shaped contour (16) of the heating plate (9, 9'), wherein the shaped contour (16) is formed relative to the clamping contour (53) as a depression (19) on the lower side of the heating plate (13).

8. Vacuum-forming device according to Claim 7,
**characterized in that** the shaped contour (16) of the heating plate (13) is milled.

9. Vacuum-forming device according to Claim 7 or 8,
**characterized in that** at least one capillary opening (35) is formed on the shaped contour (16) of the heating plate (13), wherein the at least one capillary opening (35) via a second vacuum channel (28) is connected to a first vacuum source (21) and/or a second vacuum source (27).

10. Packaging machine for producing film packaging, having a vacuum-forming device (12) according to one of Claims 1 to 9.

11. Method for vacuum-forming film for producing film packaging by a packaging machine according to Claim 10,
wherein a film (2) is supplied to at least one die plate (9, 9'),
wherein the heating plate (13) is lowered onto the die plate (9, 9'),
wherein the film (2) is clamped between the clamping device (51) of the heating plate (13) and the die plate (9, 9').

12. Method according to Claim 11,
wherein the film (2) is heated by the heating plate (13).

13. Method according to Claim 11 or 12,
**characterized in that** for pre-stretching the film (2) a vacuum is applied to the shaped contour (16) of the heating plate (13), wherein the film (2) is suctioned by the heating plate (13) and rests on the shaped contour (16).

14. Method according to one of Claims 11 to 13,
**characterized in that** the film (2), in particular upon pre-stretching the film (2), is vacuum-formed in the individual cavities (36) of the die plate (9, 9') by a vacuum applied to the individual cavities (36).

## Revendications

1. Dispositif d'emboutissage pour l'emboutissage de film,
comprenant un agencement de plusieurs plaques de matrice (9, 9'), qui peut être entraîné dans une voie de circulation par un transporteur (7), chaque plaque de matrice (9, 9') comprenant sur un côté supérieur (43) au moins deux cavités individuelles (36), et avec au moins un appareil de vide de formage (20), l'appareil de vide de formage (20) comprenant au moins une première source de vide (21) pour fournir un vide, et l'au moins une première source de vide (21) pouvant être reliée par un premier canal de vide (26) aux au moins deux cavités individuelles (36) de chaque plaque de matrice (9, 9') pour fournir un vide pour l'emboutissage d'un film (2), et avec au moins une plaque chauffante (13) pour chauffer le film (2),
**caractérisé en ce que** la plaque chauffante (13) comprend sur son côté inférieur (15) un dispositif de serrage (51) avec au moins un moyen de serrage (52) pour serrer le film (2), le moyen de serrage (52) présentant un contour de serrage (53) pour entrer en contact avec le film (2), et le contour de serrage (53) entourant au moins partiellement au moins deux cavités individuelles (36) dans une position (45) du dispositif d'emboutissage (12) dans laquelle le film (2) est serré dans une direction d'observation perpendiculaire au côté supérieur (43) de la plaque de matrice (9, 9').

2. Dispositif d'emboutissage selon la revendication 1,
**caractérisé en ce que**, dans une position (45) du dispositif d'emboutissage (12) dans laquelle le film (2) est serré, le contour de serrage (53) entoure complètement au moins deux cavités individuelles (36) dans une direction d'observation perpendiculaire au côté supérieur (43) de la plaque de matrice (9, 9').

3. Dispositif d'emboutissage selon la revendication 1 ou la revendication 2,
**caractérisé en ce que** le dispositif de serrage (51) est réalisé de telle sorte que, dans la position serrée (45) du dispositif d'emboutissage (12), le film (2) est directement serré entre le contour de serrage (53) du moyen de serrage (52) et le côté supérieur (43) de la plaque de matrice (9, 9').

4. Dispositif d'emboutissage selon l'une quelconque des revendications 1 à 3,
**caractérisé en ce que** le moyen de serrage (52) est réalisé sous la forme d'une nervure de serrage (54).

5. Dispositif d'emboutissage selon la revendication 4,
**caractérisé en ce que** la nervure de serrage (54) forme le seul moyen de serrage (52) du dispositif de serrage (51) et, dans une position (45) du dispositif d'emboutissage (12) dans laquelle le film (2) est serré, entoure toutes les cavités individuelles (36) de la plaque de matrice (9, 9') dans une direction d'observation perpendiculaire au côté supérieur (43) de la plaque de matrice (9, 9').

6. Dispositif d'emboutissage selon l'une quelconque des revendications 1 à 5,
**caractérisé en ce que** le contour de serrage (53) du moyen de serrage (52) est réalisé directement sur le côté inférieur (15) de la plaque chauffante (13).

7. Dispositif d'emboutissage selon l'une quelconque des revendications 1 à 6,
**caractérisé en ce que** le contour de serrage (53) du moyen de serrage (52) entoure un contour de forme (16) de la plaque chauffante (9, 9'), le contour de forme (16) étant réalisé en face du contour de serrage (53) sous forme de renfoncement (19) sur le côté inférieur de la plaque chauffante (13).

8. Dispositif d'emboutissage selon la revendication 7,
**caractérisé en ce que** le contour de forme (16) de la plaque chauffante (13) est fraisé.

9. Dispositif d'emboutissage selon la revendication 7 ou la revendication 8,
**caractérisé en ce qu'**au moins une ouverture capillaire (35) est réalisée sur le contour de moule (16) de la plaque chauffante (13), l'au moins une ouverture capillaire (35) étant reliée à une première source de vide (21) et/ou à une deuxième source de vide (27) par l'intermédiaire d'un deuxième canal de vide (28).

10. Machine d'emballage pour la fabrication d'emballages en film avec un dispositif d'emboutissage (12) selon l'une quelconque des revendications 1 à 9.

11. Procédé d'emboutissage de film pour la fabrication d'emballages en film avec une machine d'emballage selon la revendication 10,
un film (2) étant amené à au moins une plaque de matrice (9, 9'),
la plaque chauffante (13) étant abaissée sur la plaque de matrice (9, 9'),
le film (2) étant serré entre le dispositif de serrage (51) de la plaque chauffante (13) et la plaque de matrice (9, 9').

12. Procédé selon la revendication 11,
dans lequel le film (2) est chauffé par la plaque chauffante (13).

13. Procédé selon la revendication 11 ou la revendication 12,
**caractérisé en ce que**, pour préétirer le film (2), un vide est appliqué sur le contour de moule (16) de la plaque chauffante (13), moyennant quoi le film (2) est aspiré par la plaque chauffante (13) et s'applique sur le contour de moule (16).

14. Procédé selon l'une quelconque des revendications 11 à 13,
**caractérisé en ce que** le film (2), notamment après un pré-étirage du film (2), est embouti dans les cavités individuelles (36) de la plaque de matrice (9, 9') par un vide appliqué dans les cavités individuelles (36).
